# EUROPEAN PATENT APPLICATION

(11) **EP 2 455 869 A1**
(43) Date of publication of application: **23.05.2012**
(21) Application number: 10189989.6
(22) Date of filing: 04.11.2010
(51) Int. Cl.: G06F 17/30

(54) **Method for performing a database search in a database system**

(71) Applicant: Tieto Oyj, 00441 Helsinki (FI)
(72) Inventor: Lähteenmäki, Juha, 05400, Jokela (FI)
(74) Representative: Helino, Timo Kalervo

(57) **Abstract**

The invention relates to a method for performing a query to a database system. In the method metadata relating to a database is retrieved from the database system. A search category is determined based on the metadata. The search category represents relationships between tables in the database. Search terms associated with the columns in the tables and received. A search data structure is obtained based on the search category and the search terms. The data structure comprises different parts corresponding to different tables. Search corresponding to the different parts are executed as separate using information in the different parts of the search data structure. A set operation between key column value sets obtained from the searches.

## Description

### BACKGROUND OF THE INVENTION

### Field of the invention:

The invention relates to computer databases. Particularly, the invention relates to a method for performing a database search in database system.

### Description of the Related Art:

Database systems provide a wide range of query languages and mechanisms to support ad-hoc queries to databases. Nowadays, the Structured Query Language (SQL) and relational databases are the prevalent standards in databases. The original idea behind SQL and many other query languages is to enable user-defined searches to databases to fulfill any information need that may arise for the purpose of making business or administrative decisions. However, usually the defining of such searches requires considerable care of the user. The user must be aware of the database schema and key relationships between tables to be able to find data in multiple related tables. It is possible for users to define very inefficient and resource consuming SQL searches to databases. Many queries may in practice result in full table scans, especially when the SQL query optimizer performs incorrect optimization based on incorrect deductions of the data content in the database and the user query. It is possible for the user even to define queries that perform Cartesian products of related tables.

Implementing versatile search services for business or administrative software is usually a significant part of the project in which the software is implemented. Namely, the implementation of these services means in practice a lot of hand-written code or SQL, the production of which consumes a lot of time, which leads to costs to the customer. The more complex the database the harder and more time consuming to implement the searches.

Therefore, it would be beneficial to be able to automate the user searches so that a database system would assist the user in defining efficient queries and relieving the user of the need to understand the actual database schema, in other words, the data dictionary.

### SUMMARY OF THE INVENTION:

According to an aspect of the invention, there is a method for performing a query to a database system, the method comprising: retrieving metadata relating to a database from the database system; determining a search category based on the metadata, the search category representing at least one relationship between a first table and a second table in the database; receiving at least one search term associated with at least one column in one of the first table and the second table; obtaining a search data structure based on the search category and the at least one search term, the data structure comprising a first part corresponding to the first table and a second part corresponding to the second table; executing independently as separate threads a first search using information in the first part and a second search using information in the second part; and performing a set operation between key column value sets obtained from the first search and the second search.

According to an aspect of the invention, there is a server, comprising: means for retrieving metadata relating to a data-base from the database system; means for determining a search category based on the metadata, the search category representing at least one relationship between a first table and a second table in the database; means for receiving at least one search term associated with at least one column in one of the first table and the second table; means for obtaining a search data structure based on the search category and the at least one search term, the data structure comprising a first part corresponding to the first table and a second part corresponding to the second table; means for executing independently as separate threads a first search using information in the first part and a second search using information in the second part; and means performing a set operation between key column value sets obtained from the first search and the second search.

According to an aspect of the invention, there is a computer program or a computer program embodied on a computer readable medium, the computer program comprising code for controlling a processor to execute a method comprising: retrieving metadata relating to a database from the database system; determining a search category based on the meta-data, the search category representing at least one relationship between a first table and a second table in the database; receiving at least one search term associated with at least one column in one of the first table and the second table; obtaining a search data structure based on the search category and the at least one search term, the data structure comprising a first part corresponding to the first table and a second part corresponding to the second table; executing independently as separate threads a first search using information in the first part and a second search using information in the second part; and performing a set operation between key column value sets obtained from the first search and the second search.

According to an aspect of the invention, there is a method, a computer program executing the method and a server for executing the method. The method comprising: receiving at least one search term associated with at least one column in one of a first table and a second table; obtaining a search data structure based on a search category and the at least one search term, the data structure comprising a first part corresponding to the first table and a second part corresponding to the second table; executing independently as separate threads a first search using information in the first part and a second search using information in the second part; and performing a set operation between key column value sets obtained from the first search and the second search.

According to an aspect of the invention, there is a method, a server executing the method and a computer program executing the method. The method comprises: retrieving metadata relating to a database from the database system; determining a search category based on the metadata; receiving at least one search term associated with at least one column in the first table; obtaining a search data structure based on the search category and the at least one search term, the data structure comprising a first part corresponding to the first table; executing a first search using information in the first part to obtain a key column value set; and obtaining values for at least one other column based on the key column value set from the database.

In one embodiment of the invention, the step of executing independently as separate threads a first search using information in the first part and a second search using information in the second part further comprises: constructing a first query language expression using information in the first part, the construction combining query language expression fragments corresponding to at least one data structure node in the first part; constructing a second query language expression using information in the second part, the construction combining query language expression fragments corresponding to at least one data structure node in the second part; executing independently as separate threads the first search using the first query language expression and the second search using the second query language expression.

In one embodiment of the invention, the means of executing independently as separate threads a first search using information in the first part and a second search using information in the second part further comprises: means for constructing a first query language expression using information in the first part, the construction combining query language expression fragments corresponding to at least one data structure node in the first part; means for constructing a second query language expression using information in the second part, the construction combining query language expression fragments corresponding to at least one data structure node in the second part; means for executing independently as separate threads the first search using the first query language expression and the second search using the second query language expression.

In one embodiment of the invention, the search data structure may be a tree structure.

In one embodiment of the invention, a node in the search data structure comprises at least one memory address to store data. A node may be linked to other nodes in the search data structure. A node may have associated with it at least one value. The values may indicate specific table columns and a value or a range of values for the table column, as obtained, for example, from a search expression. A group of nodes organized as a tree may be referred to herein as an execution tree.

In one embodiment of the invention, an element in the search data structure comprises a node.

In one embodiment of the invention, by a standard search is meant a relational database search where search terms are associated with columns comprising at least one of natural number, integer, decimal, floating point, character and character string values.

In one embodiment of the invention, the step of obtaining a search data structure based on the search category and the at least one search term comprises finding a preliminary search data structure constructed using the search category and filling the search data structure found using the at lest one search term. The search data structure is filled, for example, so that nodes corresponding to the columns present in the search terms are associated with values or value ranges corresponding to values provided in the search terms. The values may also be full-text values. The search category may be used as a key to find the preliminary search data structure.

In one embodiment of the invention, a search term comprises information identifying a table column and an associated value or value range.

In one embodiment of the invention, the operating system of the server node or a virtual machine on the server node maintains a pool of threads from which threads are allocated for the thread executing the first search and the thread executing the second search.

In one embodiment of the invention, executing a search using information in the first part of the search data structure comprises using information in the first part to construct an executable SQL statement. Thereupon, the SQL statement is used to conduct a search to the database, which returns at least a set of key column values. The data structure nodes may be processed individually to obtain SQL snippets. The SQL snippets may be concatenated to obtain the executable SQL statement.

In one embodiment of the invention, the obtaining of a search data structure comprises at least one of constructing the search data structure based on table relationships indicated by the search category and finding a predefined search data structure using the search category as an index or other search criterion for the finding.

In one embodiment of the invention, the metadata comprises, for example, information on tables, table column, primary keys and foreign keys in the database. In one embodiment of the invention, the metadata comprises information on the first table and the second table. In one embodiment of the invention, the metadata comprises information on key columns on the first table and the second table. The key columns may comprise the primary keys and foreign keys associated with the first table and the second table.

In one embodiment of the invention, a search category represents a data entity in the database. It may consist of one or more tables in the database. One of the tables may be set as a core table or main table, from which a set of tables may be derived. In a search category each table other than a core table may have a foreign key that references to an identifier column of the core table.

In one embodiment of the invention, a search category comprises a set of associated tables. The associations may be key relationships, such as, for example, between a primary key and a foreign key.

In one embodiment of the invention, a search category is a key or an index that may be used to find a search data structure. This may be the case if the search category has associated with it only a single table, which means that the search data structure comprises only a single part associated with the single table.

In one embodiment of the invention, a search category comprises an index to a set, where the set comprises a number of paths. A path in the set comprises at least one primary key-foreign key reference between a first table and a second table. The path may also comprise multiple primary key-foreign key references forming a chain of tables.

In one embodiment of the invention, a search category comprises an index to a set, where the set comprises a number of trees. A tree in the set may comprise at least one primary key-foreign key reference between a first table and a second table. The tree may also comprise at least one primary key-foreign key reference between the first table and a third table.

In one embodiment of the invention, the first part of the search data structure comprises at least one node to represent the first table and at least one node to represent the second table. The search data structure may also comprise at least one node to represent columns in the first table and at least one node to represent columns in the second table.

In one embodiment of the invention, the execution of the first search using information in the first part provides a first set of key values and the execution of the second search using information in the second part provides a second set of key values. The performing a set operation between key column value sets obtained from the first search and the second search may be performed by a third thread that receives the key column value sets from a first thread that executes the first search and from a second thread that executes the second search. The threads may be executed in the server. The third thread may use key column values obtained using the set operation to query values for other columns from the database.

In one embodiment of the invention, the set operation comprises at least one of a union, an intersection and a difference. The difference may be described as an operation that returns for a two sets the members of a first set that are not in members in the second set.

In one embodiment of the invention, the set operations are performed in a random access memory of the server and the key column value sets are stored in the random access memory of the server during the operation.

In one embodiment of the invention, the search category is indicated to the server, for example, by a client performing the search.

In one embodiment of the invention, in the server a search data structure is created based on the search category. The search data structure may comprise at least one node for each table associated with the search category. Thereupon, the at least one search term may be associated with at least one node in the search data structure. This may mean that nodes associated with table columns are filled with values obtained from the at least one search term.

In one embodiment of the invention, in the server at least one node associated with at least one unreferenced table is removed from the search data structure and at least one node associated with at least one unreferenced column is removed from the search data structure.

In one embodiment of the invention, in the server is constructed a query template based on the metadata and the search category. The query template is provided to a client node, which uses the query template to a display a user interface form that illustrates the tables, table columns and table column labels to the user. The tables may be presented on the user interface in an order derived from the primary key-foreign key references associated with the search category.

In one embodiment of the invention, the server forms recursively a search expression by traversing the search data structure. The search expression is, for example, an SQL statement.

In one embodiment of the invention, the server obtains obtaining other column values from at least one database table in response to obtaining a result of the performing of the set operation between the key column value sets.

In one embodiment of the invention, the search data structure comprises at least one object with at least one executable method. The at least one method may comprise a method that inserts a value specified in a search term for a column.

In one embodiment of the invention, the search data structure comprises at least one object with at least one executable method. The at least one method may comprise a method returns an SQL expression part, that is, an SQL snipped corresponding to an object sub-tree starting from the at least one object and corresponding to search terms specified in a query expression for a table.

In one embodiment of the invention, the first part in the search data structure comprises a full-text search expression and the second part in the search data structure comprises a numeric search expression.

In one embodiment of the invention, the performing of the set operation between key column value sets obtained from the first search and the second search is done in a random access memory of the server. The key column value sets are allocated memory regions from a process data segment or a stack segment associated with the process performing the set operation. The memory regions may be tables or accessed with a memory pointer from program code.

In one embodiment of the invention, the computer program is stored on a computer readable medium. The computer readable medium may be a removable memory card, a removable memory module, a magnetic disk, an optical disk, a holographic memory or a magnetic tape. A removable memory module may be, for example, a USB memory stick, a PCMCIA card or a smart memory card.

In one embodiment of the invention, a table in the database may be mapped to a standard search data structure node or element, for example, in the search data structure. A standard search data structure node or element may have associated with it a logical operation binding node or element, for example, as an immediate and only child node or element. A column in a table may be mapped to a column specific standard search node or element that is associated with the logical operation binding node or element. A foreign key column may be mapped to a key column search element or node within the search data structure such that the key column search element or node is associated with a standard search data structure node or element, for example, as an immediate child node or element. The standard search data structure node or element may represent the table referenced by the foreign key column.

In one embodiment of the invention, a table in the database may be mapped to a full-text search data structure node or element, for example, in the search data structure. A full-text search data structure node or element may have associated with it a logical operation binding node or element, for example, as an immediate and only child node or element. A text or character column in a table may be mapped to a column specific full-text search node or element that is associated with the logical operation binding node or element. A foreign key column may be mapped to a key column search element or node within the search data structure such that the key column search element or node is associated with a full-text search data structure node or element, for example, as an immediate child node or element. The full-text search data structure node or element may represent the table referenced by the foreign key column.

In one embodiment of the invention, a search category represents a data entity in the database.

In one embodiment of the invention, a search category consists of one or more tables in the database. One of the tables may be set as a core table or main table, from which a set of tables may be derived. In a search category each table other than a core table may have a foreign key that references to an identifier column of the core table. In one embodiment of the invention, a standard search data structure node or element representing a core table when used to form a query language expression and executed returns a set of identifier column values of the core table. All other standard search data structure nodes or element, which act as root elements in an execution tree may return a set of foreign key values referencing to the identifier column of the core table. A single table may belong to more than one search category.

In one embodiment of the invention, a standard search associated with a search category is executed so that a set of standard search terms may be placed into the standard search execution trees, that is, a standard search data structure based on their search category, table and column information. The standard search data structure may be stripped such that each leaf element or node having no associated standard search terms is removed.

In one embodiment of the invention, a standard search data structure is stripped such that each standard search element or node having no child elements is removed.

In one embodiment of the invention, a structured query language select statement is built for each remaining and stripped search data structure part. For example, a structured query language select statement is build for the first part of the data structure corresponding to the first table and a second part corresponding to the second table. Thereupon, the structured query language select statements are executed in the database. Thereupon, an intersection of the key sets, for example, the identifier column keys may be returned by the structured query language select statements. Thereupon, data entities are selected according to the keys contained in the intersection. The data entities comprise, for example, table rows column values associated with the keys. There may be at least one key set comprising at least one key.

In one embodiment of the invention, a full-text execution tree is a part of the search data structure for full-text search expressions.

In one embodiment, a full-text search part of a search data structure is formed, which may comprise allocating a full-text execution tree for full-text search expressions for each and-logical expression term and placing the and-terms to all leaf elements in the term-specific execution trees. A separate full-text search data structure part may be allocated for each exact-phrase term. The exact-phrase terms may be placed to all leaf elements in the term-specific execution trees. A full-text execution tree may be allocated for or-terms and the combination of the or-terms is placed to all leaf elements in the execution tree. A full-text execution tree may be allocated for without-terms and placing combination of the without-terms to all leaf elements in the execution tree. A structured query language select statement may be built for each allocated full-text execution tree. An intersection of the key sets, for example, identifier column key sets of the core table may be formed and returned by the structured query select statements except the one that returned keys for the without-terms. A difference may be formed by subtracting the keys returned for the without-terms from the intersection. The data entities according are selected to the keys that are contained in the difference. The data entities comprise, for example, table rows column values associated with the keys. There may be at least one key set comprising at least one key.

In one embodiment of the invention, the executing of a combination of standard and full-text searches may comprise: forming search data structure parts corresponding to the full-text and standard searches, executing both the standard and full-text query language statements constructed using the search data structure parts, forming an intersection of the key sets, for example, identifier column key sets of the core table, returned by the execution of the query language statements both for standard and full text except the one that returns keys for the full-text without-terms, and forming a difference by subtracting the keys returned for the full-text without term from the intersection.

In one embodiment of the invention, the method further comprises: receiving at least one search term with a full-text without-term; forming a third part to the search data structure based on the full-text without-term; executing independently as a separate thread a third search using the third part; performing a difference operation between a first key column value set obtained from the set operation between key column values sets obtained from first search and the second search and a second key column value set obtained from the third search.

In one embodiment of the invention, building a structured query language expression using search data structure parts may comprise: building a structured query language snippet for any search element, if the search element has no child elements it builds a structured query language snippet for its part independently.

In one embodiment of the invention, building a structured query language expression using search data structure parts may comprise: if a search element has child elements it builds structured query language snippet for its part by combining its own structured query language snippet to the snippets returned by its child elements and building an executable structured query language starting the process from the root element of a standard or full-text execution tree.

In one embodiment of the invention, a standard execution tree is in other words a search data structure part comprising nodes or elements for a standard search expression. A full-text execution tree is in other words a search data structure part comprising nodes or elements for a full-text search expression.

In one embodiment of the invention, a standard execution tree may be optimized by combining two or more standard execution trees to one standard execution tree with a standard table search join element causing the key sets returned by them to intersect at the database management system level.

In one embodiment of the invention, a full-text search execution tree may be optimized so that two or more full-text search elements under a logical binding element (or operator) of a full-text table search element can be converted to a tree structure that contains at the (local) root level a full-text table search union element, and under this element corresponding to each full-text search element, a full-text table search element containing the appropriate full-text search element as an only and immediate child element. In other words, the logical or operators will be converted to union operators preventing possible time-consuming table scan operations at the database management system level.

In one embodiment of the invention, two or more full-text execution trees can be combined to one full-text execution tree with a full-text table search union element causing the key sets returned by them to be merged at the DBMS level rather than the search method level.

In one embodiment of the invention, standard and full-text execution trees constructed based on the database structure can be manually fine-tuned according to the predefined XML schema. Each search element can be associated with a set of fixed conditions that will be effective always when the appropriate search element is effective.

In one embodiment of the invention, each table in a database may map to a standard table search element. Each standard table search element may contain a logical binding element (and operator) as an immediate and only child element, or otherwise referenced. Each column in a table may map to a column-specific standard search element that will be placed as a child element of the corresponding binding element of the standard table search element. Each foreign key column may map to a key column search element such that the key column search element contains a standard table search element as an immediate and only child element. The standard table search element may represent the table referenced by the foreign key column.

In one embodiment of the invention, each table in a database may map to a full-text table search element. Each full-text table search element may contain a logical binding element (or operator) as an immediate and only child element. Each character column (i.e. column containing text data) in a table may map to a full-text search element that may be placed as a child element of the corresponding binding element of the full-text table search element. Each foreign key column may map to a key column search element such that the key column search element contains a full-text table search element as an immediate and only child element. The full-text table search element represents the referenced table.

In one embodiment of the invention, a full-text table search element represents a part of the search data structure that may have been filled with values corresponding to a full-text search expression.

In one embodiment of the invention, a standard table search element represents a part of the search data structure that may have been filled with values corresponding to a standard search expression, that is, typically, a search expression without full-text searches.

In one embodiment of the invention, a search category may represent a data entity in the database. A search category may consist of one or more tables in the database. One of the tables in a search category may be set as the core table (or main table). Each table (other than the core table) in a search category may have a foreign key column that references to the ID column of the core table. The table search element representing the core table returns a set of ID values; all other table search elements, which act as a root element in an execution tree, return a set of foreign key values referencing to the ID column of the core table. A single table can belong to more than one search category.

In one embodiment of the invention, a set of standard search terms may be placed into the standard execution trees based on their search category, table, and column information. The standard execution trees may be stripped such that each leaf element having no associated standard search term will be removed. The standard execution trees may be stripped such that each standard table search element having no child elements will be removed. An SQL select statement for each remaining and stripped standard execution tree may be built. The SQL select statements in the database may be executed. The intersection of the key sets (i.e. ID sets of the core table) returned by the SQL select statements may be formed. The data or data entities according to the keys that are contained in the intersection are obtained.

In one embodiment of the invention, there may be allocated a full-text execution tree for each AND term, placing the AND terms to all leaf elements in the term-specific execution trees. There may be allocated a full-text execution tree for each EXACT PHRASE term, placing the EXACT PHRASE terms to all leaf elements in the term-specific execution trees. There may be allocated a full-text execution tree for OR terms, placing the combination of the OR terms to all leaf elements in the execution tree. There may be allocated a full-text execution tree for WITHOUT terms, placing combination of the WITHOUT terms to all leaf elements in the execution tree. An SQL statement may be built for each allocated full-text execution tree. There may be formed the intersection of the key sets (i.e. ID sets of the core table) returned by the SQL select statements except the one that returned keys for the WITHOUT terms. There may be formed the difference by subtracting the keys returned for the WITHOUT terms from the intersection. The data or data entities according to the keys that are contained in the difference may be selected.

The embodiments of the invention described hereinbefore may be used in any combination with each other. Several of the embodiments may be combined together to form a further embodiment of the invention. A method, a system, an apparatus, a computer program or a computer program product to which the invention is related may comprise at least one of the embodiments of the invention described hereinbefore.

The benefits of the invention are related to improved performance of server nodes performing database queries using the method. The benefits of the invention may also comprise the saving of CPU time, because there is no polling or waiting. Parallel execution is possible for different parts of the search data structure. Performance may also be scaled by varying the number of execution threads.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** is a block diagram illustrating a query processing system in one embodiment of the invention;
**Fig. 2A** is a block diagram illustrating the overall structure of a search tree in a query processing system in one embodiment of the invention;
**Fig. 2B** is a block diagram illustrating the a structure of a standard search sub-tree in a query processing system in one embodiment of the invention;
**Fig. 2C** is a block diagram illustrating a structure of a full-text search sub-tree in a query processing system in one embodiment of the invention;
**Fig. 3** is flow chart illustrating a database search method in one embodiment of the invention; and
**Fig. 4** is a block diagram illustrating table relationships in a search category in one embodiment of the invention;
**Fig. 5A** is a block diagram illustrating predefined a standard search tree for a search category in one embodiment of the invention;
**Fig. 5B** is a block diagram illustrating stripped standard search tree for a search category, from which unnecessary terms and tables have been trimmed, in one embodiment of the invention;
**Fig. 6** is a database tree processing method in one embodiment of the invention.

### DETAILED DESCRIPTION OF THE EMBODIMENTS:

Reference will now be made in detail to the embodiments of the present invention, examples of which are illustrated in the accompanying drawings.

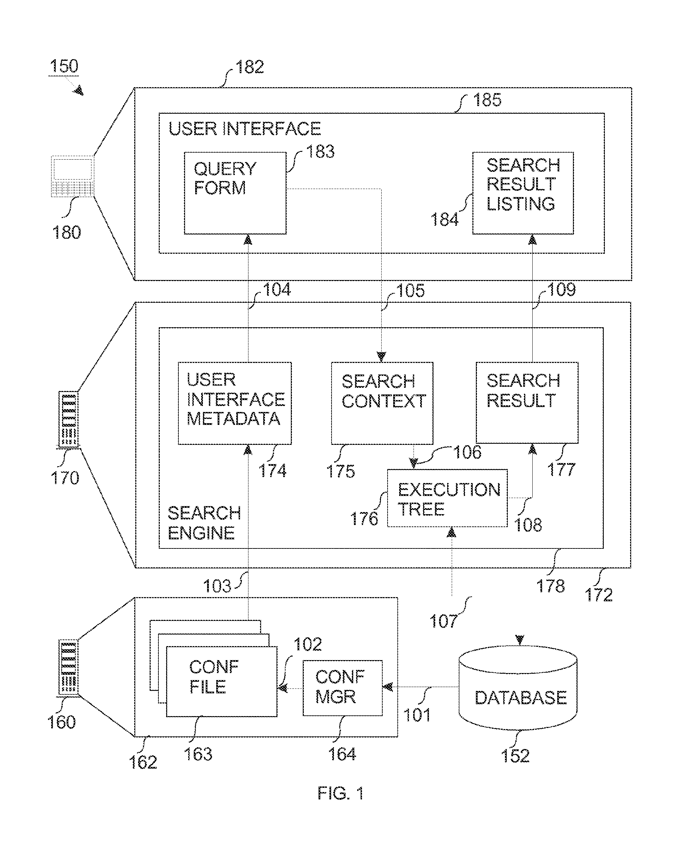

Figure 1 is a block diagram illustrating a query processing system in one embodiment of the invention. In Figure 1 there is illustrated a query processing system 150, which comprises a server 170 and an assisting server 160. Server 170 may also comprise the functions of assisting server 160. Server 160 and server 170 access a database 152, which is stored, for example, on a Redundant Array of Independent Disks (RAID) storage system. The database may be a relational database, an object database, a hierarchical database or a network database. There is also a client node 180, which may communicate with server 170 using a network (not shown). The internal functions of assisting server 160, server 170 and client node 180 are illustrated with boxes 162, 172 and 182, respectively. The client node 180 represents a user interface layer, whereas server 160 and server 170 represent a server layer. Database 152 represents a database layer. Database 152 contains a database defined using a database schema. The schema of a database system is defined in a formal language supported by the Database Management System (DBMS). In a relational database, the schema may define tables, fields i.e. columns, relationships, views, indexes, packages, procedures, functions, queues, triggers, types, sequences, materialized views, database links and other elements. The database schema may be defined in a data dictionary, in other words, a metadata repository. In a relational database system the data dictionary may be stored in the form of tables in a manner similar to user data.

The starting point in Figure 1 is that database 152 comprises, for example, a number of relations, that is, tables, which comprise a number of columns. A table may further comprise a primary key and a number of foreign keys. To cater for enabling a query from client node 180 is that a configuration manager entity 164 in assisting node 160 retrieves metadata from database 152, as illustrated with arrow 101. The metadata comprises, for example, information on the tables, table column, primary keys and foreign keys. Configuration manager 164 generates at least one configuration file 163 based on the metadata, as illustrated with arrow 102. The at least one configuration file 163 may be defined in the Extensible Markup Language (XML). The tables and columns may be represented using XML so that they may be conveniently explored using an XML Application Programming Interface (API) such as the .NET the XmlTextReader class, XmlReader class, or the Simple API for XML (SAX). There may be a configuration file for each table or for each separate database. A search engine entity 178 is provided with the at least one configuration file 163, as illustrated with arrow 103. The at least one configuration file 163 may be transferred to server 170 using, for example, the Hypertext Transfer Protocol (HTTP) or the File Transfer Protocol (FTP). Search engine entity 178 is started in server 170 and reads the at least one configuration file 163. In one embodiment of the invention, the search engine entity 178 interfaces the database, for example, using a database adapter such as Open Database Connectivity (ODBC) and a database driver. The database adapter provides a uniform interface for the search engine entity 178.

Thereupon, search engine entity 178 uses the metadata information to construct at least one initial execution tree to represent a worst-case query to the database. Search engine entity 178 may discover at least one search category from the database schema revealed by the metadata. A search category may represent a tree structure of directed paths from an initial table to a number of final tables via at least one association that comprises a foreign key in a first table and a primary key in a second table. A search category may also be defined as a path from a root node to a leaf node in the tree structure. Nodes in the tree structure represent tables. The path may fork in cases where a table contains at least two foreign keys associated with different tables in its columns. An initial table is an entry point, which does not have any foreign key references to it. At least one initial table may also be predefined in the database metadata. A final table does not have any foreign keys in its columns. There may be defined at least one initial execution tree for each search category discovered from the metadata. There may be different initial execution trees for each path in the tree structure. By a worst-case query may be meant a query that spans all tables in a search category and refers to all table columns. In other words, a worst-case query spans all tables starting from an entry point table to all leaf tables when all foreign key - primary key references are traversed. Thereupon, search engine entity 178 constructs a query form using the metadata. Search engine entity 178 may construct a separate form from each search category or several search categories may be combined to a single user interface form. According to the principle of model-view-controller a query form may simply provide a listing of tables and their columns. The column names may be replaced with human readable titles. The human readable titles may be presented in different languages depending on a language of the user. In the metadata there may be defined human readable titles in different languages.

As illustrated with arrow 104, a user interface entity 185 in client node 180 requests the metadata or the query form. User interface entity 185 constructs a presentable form, for example, a web form or a window using the query form or the metadata. User interface entity 185 presents the presentable form on a display of the client node 180. A user navigates form fields and enters values to selected fields. The presentable form provides a button which allows the user to submit a query.

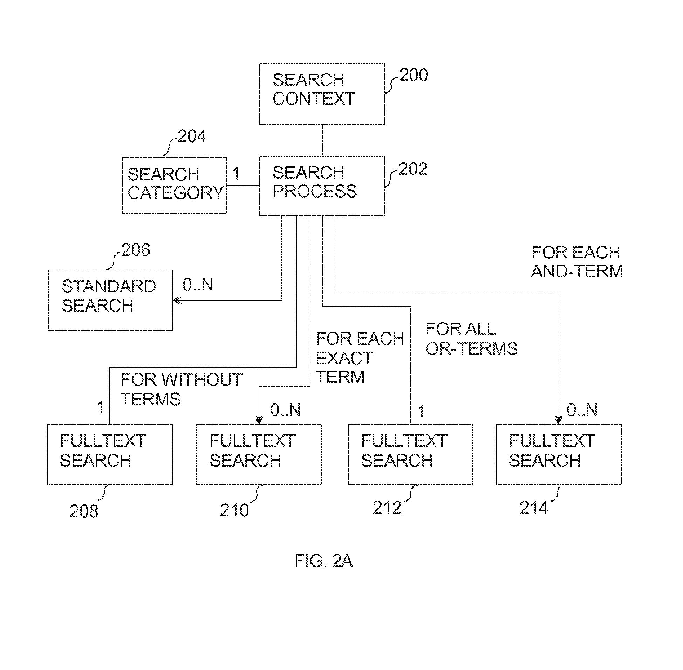

User interface entity 185 provides the values entered and at least names of the filled columns in a query message to search engine entity 178 within server 170, as illustrated with arrow 105. The query message may also comprise a Boolean expression wherein the predicates in the expression are column and value pairs. The values may also be value ranges. Search engine entity 178 obtains the column values from the query. Search engine entity 178 determines the search category that the query was associated with. The determination may be performed explicitly from the query message received or implicitly by analyzing the columns identified in the query message. The query is used to form a search context. The search context has associated with it an identifier for the search category. The search category identifier is used to obtain a correct initial execution tree. Search engine entity 178 starts traversing the tree and fills search elements with values from the query. It should be noted that the values may also be value ranges. Search engine entity 178 determines correct search elements with column names from the query. If the query spans multiple tables, search elements for key columns are also filled and sub-tree for associated tables are also filled. Thereupon, a filled execution tree is obtained, as illustrated with arrow 106. An example of an execution tree is defined in Figure 2A.

In one embodiment of the invention, there are separate sub-trees in the tree for full-text searches that search text columns for occurrences of specific character strings or specific sets of words. In these sub-trees the search element values are set to a character string or a set of words. In these sub-trees there are no nodes for Boolean expressions.

In one embodiment of the invention, there is defined a separate sub-tree for each set of full-text search associated search elements that is to be bound with an AND-condition. This means that each search element must be satisfied in order to yield a result table row, that is, a tuple.

In one embodiment of the invention, there is a single sub-tree for all search elements that have associated with them a WITHOUT-expression, which searches for tuples that do not have the character string or set of words in the text columns corresponding to the search elements.

In one embodiment of the invention, there is a single sub-tree for all search elements that are to be bound with an OR-condition.

In one embodiment of the invention, there are separate sub-trees for each exact phrase that defines a character string to be found in a text column. The character string may comprise whitespace.

Thereupon, search engine entity 178 trims the execution tree filled. The trimming comprises that all search elements not filled with associated column values are removed from the tree and that sub-trees represented tables, which have no filled search elements, are entirely removed. In other words, only tree nodes that are on a path from a filled search element to the tree root are maintained. The tree elements representing tables, Boolean expressions binding together at least one search element, and the search elements themselves are used to construct SQL statements. In one embodiment of the invention this is achieved by executing recursively methods on objects representing the tree nodes for the tables, Boolean expressions binding together at least one search element, and the search elements themselves. After the construction of the SQL statements, search engine entity 178 executes the SQL statements. This may be expressed so that search engine entity 178 executes the trimmed execution tree. In the execution process the sub-trees from the trimmed execution tree may be assigned for execution to different threads. In other words, SQL statements obtained corresponding to the sub-trees are assigned for execution to different threads. A result set obtained for a given sub-tree comprises a set of key values that refer to a core table. The core table may be the entry point table for the search category associated with the query. For the core table the key values are the primary key values. For other tables referring to the core table the key values are foreign key values referring to primary key values in the core table. Search engine entity 178 computes an intersection of each result set. This intersection may also be referred to as the standard search intersection. The intersection is thereupon used to execute at least one SQL statement that obtains values for the columns in each table specific in the trimmed execution tree. The table column values obtained from the database are used to construct a search result 177, as illustrated with arrow 108. The search result is transmitted for presentation to client node 180, as illustrated with arrow 109. The transmission occurs, for example, using an HTTP 200 OK response message that provides the search result as a web page. A search result listing 184 is presented to the user of client node 180 based on the response message content.

In one embodiment of the invention, the sub-trees for each AND-expression in the query, the sub-tree corresponding to all OR-terms, the sub-trees for each exact phrase and the sub-tree corresponding to all without terms are executed in parallel as separate query threads. A query thread provides as a result a set of key values as explained above. The key value sets resulting from the processing of the AND-expression sub-trees, the OR-expression sub-tree, the exact phrase sub-trees are used to compute an intersection. From the intersection is removed the key values obtained by processing the sub-tree for the without-term. The resulting key values are further used to compute an intersection with the key values obtained from the processing of the non-full-text sub-trees, that is, the standard search intersection.

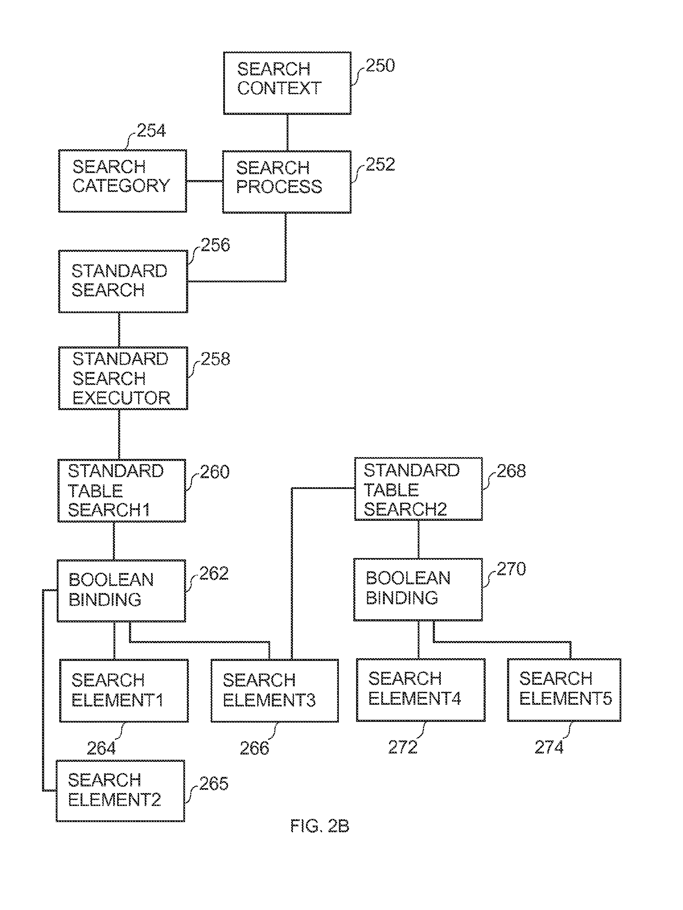

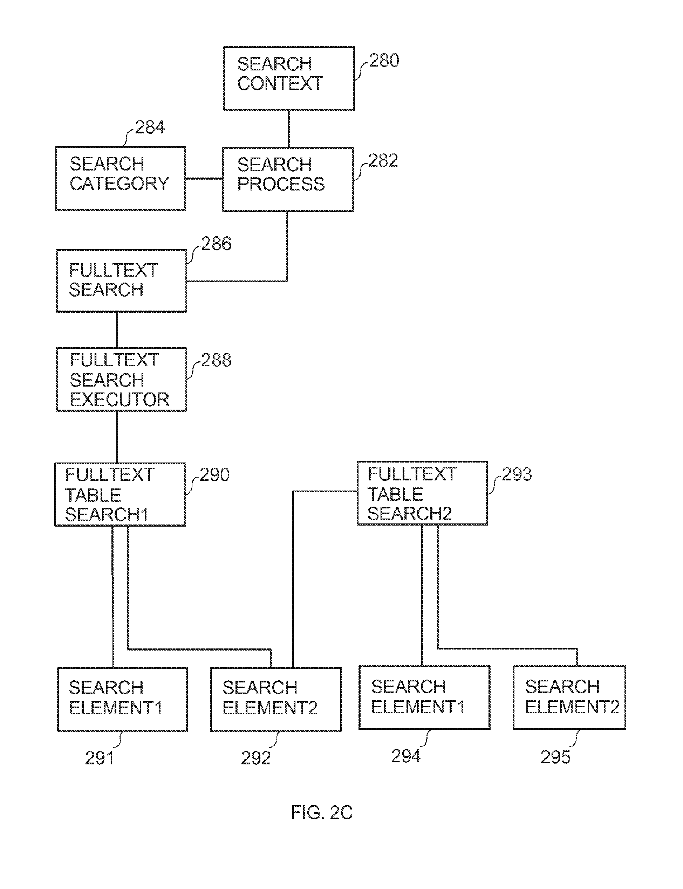

When at least one processor executes functional entities associated with the invention, a memory comprises entities such as search engine entity 178. The functional entities within server 170 illustrated in Figure 1 may be implemented in a variety of ways, this also concerns functional entities illustrated in Figures 2A, 2B and 2C. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optic disk. Some functional entities may be implemented as program modules linked to another functional entity. The functional entities in Figure 1 may also be stored in separate memories and executed by separate processors, which communicate, for example, via a message bus or an internal network within the network node. An example of such a message bus is the Peripheral Component Interconnect (PCI) bus.

The embodiments of the invention described in association with description of Figure 1 may be used in any combination with each other. Several of the embodiments may be combined together to form a further embodiment of the invention.

Figure 2A is a block diagram illustrating the overall structure of a search tree in a query processing system in one embodiment of the invention. In Figure 2A is illustrated the relationships between entities. The search tree comprises a search context 200, which comprises the search related column values obtained, for example, from a client node. The search tree is associated with a search category 204, which defines a core table, in other words, an entry point table. Associated with search context 200 there is a search process 202. Associated with search process 202 there is at least one standard search 206, which represent at least one query for table columns which do not contain text. Associated with search process 202 there is a single full-text search 208, which is for all without-type search terms that require specified text columns not to contain a specific character strings. Associated with search process 202 there is at least one full-text search 210, which is defined for each search term that requires the presence of a specific character string in a text column. Associated with search process 202 there is a single full-text search 212, which is for all OR-type search terms associated with text columns. Associated with search process 202 there is at least one full-text search 214, which is defined for each AND-type search term.

Entities illustrated in Figure 2A may be software entities such as object classes, methods, subroutines, modules or libraries. Search category may represent a variable or attribute value. Execution of search context 200 results in the execution of search entities 206, 208, 210, 212 and 214, for example, so that search context executes search process 202, which in turn executes the search entities. The search entities may be executed in parallel as separate threads and independently. In the execution of the search tree defined in Figure 2A search entities 206, 208, 210, 212 and 214 each provide as a result a set of keys. The result key set from each search entity is provided to search process 202, which provides a result list comprising table column values corresponding to a list of key values. The list of key values is obtained by intersecting or excluding values from individual key sets. For example, result key sets from standard search 206 and full-text searches 210, 212 and 214 are used to compute an intersection set.

Figure 2B is a block diagram illustrating the overall structure of a search tree in a query processing system in one embodiment of the invention. The search tree illustrates an instance of a search tree for a query comprising search terms for non full-text columns, that is, standard searches in particular. In one embodiment of the invention, by a standard search is meant a relational database search where search terms are associated with columns comprising at least one of natural number, integer, decimal, floating point, character and character string values. The search tree comprises a search context 252, which comprises the search related column values. The search tree is associated with a search category 254, which defines a core table, in other words, an entry point table. Associated with search context 250 there is a search process 252.

Entities illustrated in Figure 2B may be software entities such as object classes, methods, subroutines, modules or libraries. Search category may represent a variable or attribute value. Execution of search context 250 results in the execution entities 256, 258, 260, 264, 265, 266, 268, 270, 272 and 274, for example, so that search context 250 executes search process 252, which in turn executes standard search entity 256. Standard search entity 256 invokes standard search executor 258. When a query is processed in the search tree, the standard table search entity 260 represents an entry point table, that is, a core table. Standard table search entity 268 represents a table associated with the core table via primary key-foreign key references. Entity 262 represents a Boolean binding between search element entities 264 and 266. Similarly, entity 270 represents a Boolean binding between search element entities 272 and 274. Search element entities 264, 265, 266, 272 and 274 encapsulate values or value-ranges required of a column that the search element entity in question represents. Search element entities 264, 265, 266, 272 and 274 represent columns present in a query. When the query is received, for example, by a search execution entity in a query processing server, the query is processed by executing the search tree. The entities 260, 262, 264, 265, 266, 268, 270, 272 and 274 are first executed so that they are instantiated with column values obtained in the query. Thereupon, the standard search executor 258 executes recursively the subordinate entities for tables, bindings and search elements. As the results the subordinate entities provide SQL snippets to the entity that invoked them. The SQL snippets represent the Boolean conditions and column values or value ranges. In the invoking entity the SQL snippets are assembled to form a further SQL snippet. Finally, standard search executor 258 obtains SQL snippets for each table involved in the query. The standard search executor 258 executes forms executable SQL statements from the SQL snippets for each table. The SQL statements are defined separately for each table. The SQL statements may be executed in separate threads independently.

Figure 2C is a block diagram illustrating a structure of a full-text search tree in a query processing system in one embodiment of the invention. The search tree illustrates an instance of a search tree for a query comprising search terms for text columns in particular. The search tree comprises a search context 280, which comprises the search related column values. The search tree is associated with a search category 284, which defines a core table, in other words, an entry point table. Associated with search context 280 there is a search process 282. Associated with search process 282 there is a full-text search entity 286. Associated with full-text search entity 286 there is a full-text search executor entity 288. Representing a core table involved in a query received by a search engine entity such as, for example, search engine entity 178, there is full-text table search entity 290. Associated with a table which has a foreign key referring to core table there is full-text table search entity 293. Search elements for columns present in the query are represented by search elements 291, 292, 294 and 295. The full-text search executor entity 288 may execute the search in a manner similar to standard search executor 258 in Figure 2B. However, no Boolean entities are present in the full-text search tree.

The embodiments of the invention described in association with description of Figures 2A, 2B and 2C may be used in any combination with each other. Several of the embodiments may be combined together to form a further embodiment of the invention.

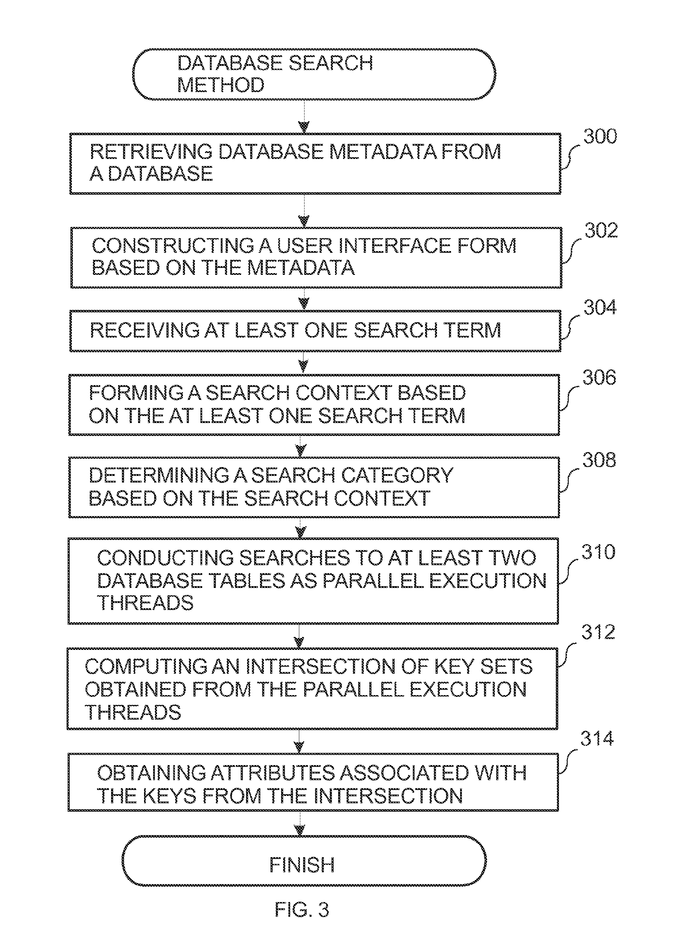

Figure 3 is flow chart illustrating a database search method in one embodiment of the invention.

At step 300 database metadata is retrieved from a database. The metadata comprises, for example, information on the tables, table column, primary keys and foreign keys. In one embodiment of the invention, at least one initial search tree is constructed using the metadata.

At step 302 a user interface form is constructed based on the metadata. In one embodiment of the invention, the user interface form comprises information on at least one column on at least one table in the database. The user interface form may be simply a list of columns to be formatted for presentation by a user interface entity.

At step 304 at least one search term is received. In one embodiment of the invention, the search term comprises values or value ranges for table columns.

At step 306 a search context is formed based on the at least one search term.

At step 308 a search category is determined based on the search context. In one embodiment of the invention, the search category is used to find an initial search tree among the at least one initial search tree. In one embodiment of the invention, the search category identifies an entry point table, that is, a core table. The core table is associated via primary key-foreign key relationships to at least one second table.

At step 310 searches to at least two database tables are conducted parallel as separate execution threads. In one embodiment of the invention, a thread is a program block in execution in a virtual machine. In one embodiment of the invention, the thread is a process executing under a native operating system.

At step 310 an intersection of key sets obtained from the parallel execution threads is computed. In one embodiment of the invention, the finishing of the execution of an execution thread returns a key set. In one embodiment of the invention, the key set comprises keys referring to the core table.

At step 314 attributes associated with keys obtained from the intersection are enquired from the database.

The embodiments of the invention described in association with description of Figure 3 may be used in any combination with each other. Several of the embodiments may be combined together to form a further embodiment of the invention.

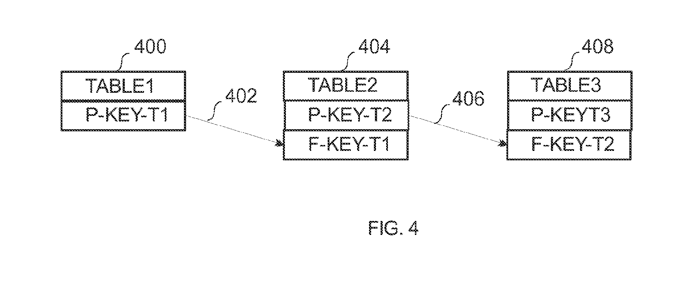

Figure 4 is a block diagram illustrating table relationships in a search category in one embodiment of the invention.

In a search category of Figure 4 there is an entry point table, that is, a core table 400 which has a primary key column P-KEY-T1. In a table 404 there is a primary key column P-KEY-T2 and a foreign key column F-KEY-T2. In a table 408 there is a primary key column P-KEY-T3 and a foreign key column F-KEY-T2. As illustrated with arrow 402 one-to-many relationship may be established by incorporating a foreign key column to table 404 that refers to primary key column P-KEY-T1 in table 402. Similar one-to-many relationship is established between tables 404 and 408, as illustrated with arrow 406. In one embodiment of the invention, a search category may be defined as a chain of primary key-foreign key relations starting from a query entry point table.

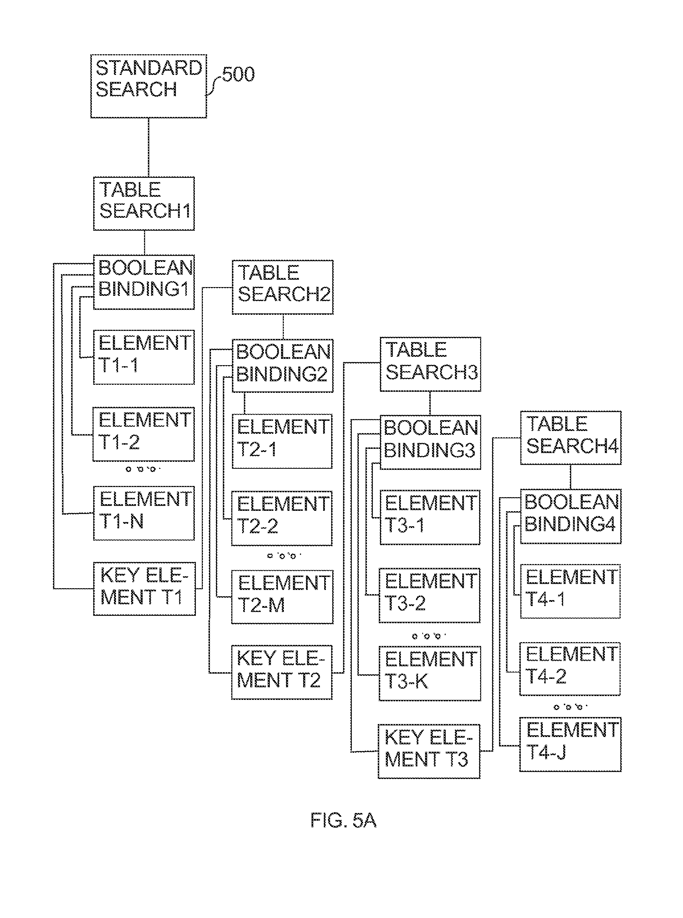

Figure 5A is a block diagram illustrating predefined a standard search tree for a search category in one embodiment of the invention.

In Figure 5A there is an initial search tree 500. The search tree is a standard search tree, that is, a tree for a search without full-text search terms. Search tree is associated with a search category that encompasses four tables related with primary key-foreign key relationships starting from a table represented by a tree node TABLE SEARCH1. The other tables are represented by tree nodes TABLE SEARCH2, TABLE SEARCH3 and TABLE SEARCH4. Associated with node TABLE SEARCH1 there is a node BOOLEAN BINDING1 that represents a Boolean operator binding together column specific search terms represented by nodes ELEMENT T1-1, ELEMENT T1-2, ELEMENT T1-N and KEY ELEMENT T1. Associated with node TABLE SEARCH2 there is a node BOOLEAN BINDING2 that represents a Boolean operator binding together column specific search terms represented by nodes ELEMENT T2-1, ELEMENT T2-2, ELEMENT T1-M and KEY ELEMENT T2. Associated with node TABLE SEARCH3 there is a node BOOLEAN BINDING3 that represents a Boolean operator binding together column specific search terms represented by nodes ELEMENT T3-1, ELEMENT T3-2, ELEMENT T3-K and KEY ELEMENT T3. Associated with node TABLE SEARCH4 there is a node BOOLEAN BINDING4 that represents a Boolean operator binding together column specific search terms represented by nodes ELEMENT T4-1, ELEMENT T4-2 and ELEMENT T4-J. The letters N, M, K and J stand for arbitrary natural numbers.

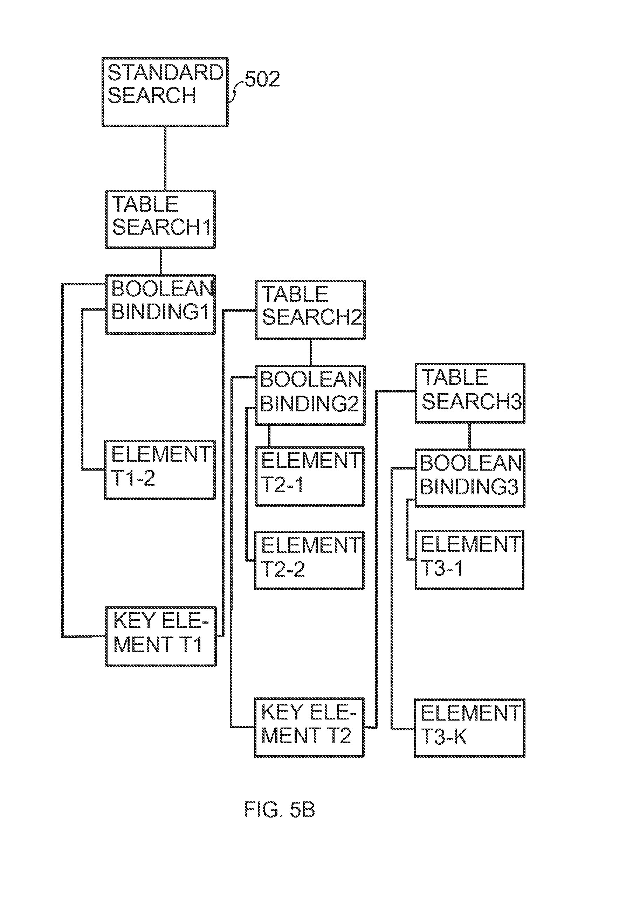

Figure 5B is a block diagram illustrating stripped standard search tree for a search category, from which unnecessary terms and tables have been trimmed, in one embodiment of the invention. In Figure 5A there is a trimmed search tree 502, which represents search tree 500 from Figure 5A after receiving a query that comprises search terms related to columns represented by nodes ELEMENT T1-2, ELEMENT T2-1, ELEMENT T2-2, ELEMENT T3-1 and ELEMENT T3-K. Trimming results to the removal of nodes representing tables that are subordinate to the table that is the last one to contain referred columns. By last one is meant in this case the last table in the path of primary key-foreign key relationships associated with the search category. Also node representing columns not referred to in the query are removed in the trimming process.

The embodiments of the invention described in association with description of Figures 5A and 5B may be used in any combination with each other. Several of the embodiments may be combined together to form a further embodiment of the invention.

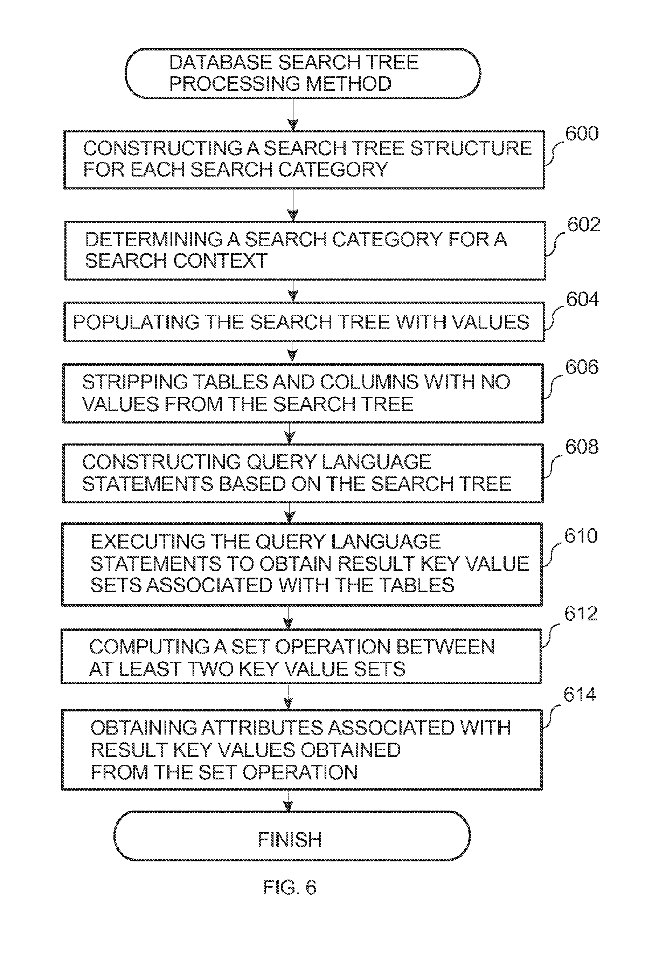

Figure 6 is a database tree processing method in one embodiment of the invention.

At step 600 a search tree structure is constructed for a search category. In one embodiment of the invention, the search category is determined based on metadata in a database.

In one embodiment of the invention, a search category comprises an index to a set, where the set comprises a number of paths. A path in the set comprises at least one primary key-foreign key reference between a first table and a second table. The path may also comprise multiple primary key-foreign key references forming a chain of tables.

In one embodiment of the invention, a search category comprises an index to a set, where the set comprises a number of trees. A tree in the set comprises at least one primary key-foreign key reference between a first table and a second table. The tree may also comprise at least one primary key-foreign key reference between the first table and a third table.

At step 602 a search category is determined for a search context. A search context may comprise a number of search terms associated with relational table columns. The search context may be obtained as a result of a query received by a server having an association with the database.

At step 604 the search tree is populated with values corresponding to a query. The query may be received by the server.

At step 606 nodes for tables and columns that are not specified in the query are removed.

At step 608 at least one query language statement is constructed based on the search tree. In one embodiment of the invention, the query language is the Structured Query Language (SQL).

At step 610 the at least one query language statement is executed to produce at least two result key value sets, each key value set being associated with a table.

At step 612 a set operation is computed using the at least two result key value sets. The set operation may be performed in a random access memory of a server.

At step 614 attributes associated with result key values obtained from the set operation are obtained from a database. Thereupon, the method is finished.

The embodiments of the invention described in association with description of Figure 6 may be used in any combination with each other. Several of the embodiments may be combined together to form a further embodiment of the invention.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for performing a query to a database system, the method comprising:
retrieving metadata relating to a database from the database system;
determining a search category based on the metadata, the search category representing at least one relationship between a first table and a second table in the database;
receiving at least one search term associated with at least one column in one of the first table and the second table;
obtaining a search data structure based on the search category and the at least one search term, the data structure comprising a first part corresponding to the first table and a second part corresponding to the second table;
executing independently as separate threads a first search using information in the first part and a second search using information in the second part; and
performing a set operation between key column value sets obtained from the first search and the second search.

2. The method according to claim 1, the step of executing independently as separate threads a first search using information in the first part and a second search using information in the second part further comprises:
constructing a first query language expression using information in the first part, the construction combining query language expression fragments corresponding to at least one data structure node in the first part;
constructing a second query language expression using information in the second part, the construction combining query language expression fragments corresponding to at least one data structure node in the second part;
executing independently as separate threads the first search using the first query language expression and the second search using the second query language expression.

3. The method according to claim 1, wherein the set operation comprises at least one of a union, an intersection and a difference.

4. The method according to claim 1, the method further comprising:
forming the search data structure based on the search category, the search data structure comprising at least one node for each table associated with the search category; and
associating the at least one search term with at least one node in the search data structure.

5. The method according to claim 4, the method further comprising:
removing at least one node associated with at least one unreferenced table from the search data structure; and
removing at least one node associated with at least one unreferenced column from the search data structure.

6. The method according to claim 1, the method further comprising:
constructing a query template based on the metadata and the search category; and
presenting the query template on a display.

7. The method according to claim 1, the method further comprising:
forming recursively a search expression by traversing the search data structure.

8. The method according to claim 1, wherein the method further comprises:
obtaining other column values from at least one database table in response to obtaining a result of the performing of the set operation between the key column value sets.

9. The method according to claim 1, wherein the search data structure comprises at least one object with at least one executable method.

10. The method according to claim 1, wherein the first part in the search data structure comprises a full-text search expression and the second part in the search data structure comprises a numeric search expression.

11. The method according to claim 1, wherein the performing of the set operation between key column value sets, which are obtained from the first search and the second search, is conducted in a random access memory.

12. A method for performing a query to a database system, the method comprising:
retrieving metadata relating to a database from the database system;
determining a search category based on the metadata;
receiving at least one search term associated with at least one column in the first table;
obtaining a search data structure based on the search category and the at least one search term, the data structure comprising a first part corresponding to the first table;
executing a first search using information in the first part to obtain a key column value set; and
obtaining values for at least one other column based on the key column value set from the database.

13. A server, comprising:
means for retrieving metadata relating to a database from the database system;
means for determining a search category based on the metadata, the search category representing at least one relationship between a first table and a second table in the database;
means for receiving at least one search term associated with at least one column in one of the first table and the second table;
means for obtaining a search data structure based on the search category and the at least one search term, the data structure comprising a first part corresponding to the first table and a second part corresponding to the second table;
means for executing independently as separate threads a first search using information in the first part and a second search using information in the second part; and
means for performing a set operation between key column value sets obtained from the first search and the second search.

14. A server comprising:
means for retrieving metadata relating to a database from the database system;
means for determining a search category based on the metadata;
means for receiving at least one search term associated with at least one column in the first table;
means for obtaining a search data structure based on the search category and the at least one search term, the data structure comprising a first part corresponding to the first table;
means for executing a first search using information in the first part to obtain a key column value set; and
means for obtaining values for at least one other column based on the key column value set from the database.

15. A computer program embodied on a computer readable medium, the computer program comprising code for controlling a processor to execute a method comprising:
retrieving metadata relating to a database from the database system;
determining a search category based on the metadata, the search category representing at least one relationship between a first table and a second table in the database;
receiving at least one search term associated with at least one column in one of the first table and the second table;
obtaining a search data structure based on the search category and the at least one search term, the data structure comprising a first part corresponding to the first table and a second part corresponding to the second table;
executing independently as separate threads a first search using information in the first part and a second search using information in the second part; and
performing a set operation between key column value sets obtained from the first search and the second search.

16. The computer program according to claim 13, wherein said computer program is stored on a computer readable medium.

17. The computer program according to claim 14, wherein said computer readable medium is a removable memory card, a holographic memory, a magnetic disk or an optical disk.

18. A computer program embodied on a computer readable medium, the computer program comprising code for controlling a processor to execute a method comprising:
retrieving metadata relating to a database from the database system;
determining a search category based on the metadata, the search category representing at least one relationship between a first table and a second table in the database;
receiving at least one search term associated with at least one column in one of the first table and the second table;
obtaining a search data structure based on the search category and the at least one search term, the data structure comprising a first part corresponding to the first table and a second part corresponding to the second table;
executing independently as separate threads a first search using information in the first part and a second search using information in the second part; and
performing a set operation between key column value sets obtained from the first search and the second search.

19. The computer program according to claim 18, wherein said computer program is stored on a computer readable medium.

20. The computer program according to claim 19, wherein said computer readable medium is a removable memory card, a holographic memory, a magnetic disk or an optical disk.
